# EUROPEAN PATENT APPLICATION

(11) **EP 3 378 732 A1**
(43) Date of publication of application: **26.09.2018**
(21) Application number: 16866016.5
(22) Date of filing: 16.09.2016
(51) Int. Cl.: B62D 5/04, F16D 1/06

(54) **POWER STEERING DEVICE AND STEERING DEVICE WITH SAME**

(30) Priority: 18.11.2015 JP 2015225577
(71) Applicant: KYB Corporation, Tokyo 105-6111 (JP)
(72) Inventor: SHIMIZU, Tetsuro, Tokyo 105-6111 (JP)
(74) Representative: Grünecker Patent- und Rechtsanwälte PartG mbB
(86) International application number: PCT/JP2016/077585
(87) International publication number: WO 2017/086013

(57) **Abstract**

A power steering device 100 includes: a steering shaft 2 that rotates under a steering torque input from the steering wheel 1; an electric motor 30 that applies a rotation torque for assisting the steering torque to the steering shaft 2; and a speed reduction unit 40 that decelerates the rotation of the electric motor 30 and transmits the decelerated rotation to the steering shaft 2. The steering shaft 2 includes a serration portion 14 and a tapered portion 15. One of a pinion gear 21 and a pitman arm 25 of the turning mechanism 20 is selectively coupled to the serration portion 14 by serration. The tapered portion 15 positions the pinion gear 21 in the radial direction by coming into contact with the pinion gear 21.

## Description

### TECHNICAL FIELD

The present invention relates to a power steering device and a steering device including the same.

### BACKGROUND ART

JP 2014-184872A discloses a power steering device interposed between a steering shaft and a steering arm that is joined to left and right tie rods and transmits a steering force to left and right wheels.

### SUMMARY OF INVENTION

Generally, as a turning mechanism that converts the rotation of a steering shaft of a power steering device into a turning force for wheels, a rack and pinion mechanism and a link mechanism that is disclosed in JP 2014-184872A are used depending on the specifications and the like of a vehicle on which the power steering device is mounted. Also, in a power steering device, components that are designed in accordance with the type of a turning mechanism are generally used.

However, if different components are used depending on the type of a turning mechanism, the number of components will increase, thereby raising the cost of design and manufacture of a power steering device.

The present invention aims to reduce the manufacturing cost of a power steering device.

According to one aspect of the present invention, a power steering device configured to apply a turning force for turning wheels to a turning mechanism, the power steering device includes: a steering shaft configured to rotate under a steering torque input from a steering handle; an electric motor configured to apply a rotation torque for assisting the steering torque to the steering shaft; and a speed reduction unit configured to decelerate the rotation of the electric motor and transmit the decelerated rotation to the steering shaft. The steering shaft includes a coupling portion and a positioning portion. One of a pinion gear and a pitman arm of the turning mechanism is selectively coupled to the coupling portion in a relatively nonrotatable manner. The positioning portion positions the pinion gear in a radial direction by coming into contact with the pinion gear.

### BRIEF DESCRIPTION OF DRAWINGS

FIG. 1 shows a configuration of a steering device according to an embodiment of the present invention.
FIG. 2 is a cross-sectional view of a power steering device according to the embodiment of the present invention.
FIG. 3 is a cross-sectional view of the steering device according to the embodiment of the present invention, and depicts a case where a rack and pinion mechanism is included as a turning mechanism.
FIG. 4 is an enlarged view of section A in FIG. 3.
FIG. 5 is an enlarged view of section B in FIG. 3.
FIG. 6 shows a configuration of a link mechanism of the steering device according to the embodiment of the present invention.
FIG. 7 is a cross-sectional view of the steering device according to the embodiment of the present invention, and depicts a case where the link mechanism is included as the turning mechanism.
FIG. 8 is an enlarged view of section C in FIG. 7.
FIG. 9 is a cross-sectional view showing an exemplary modification of an output shaft of the power steering device according to the embodiment of the present invention.

### DESCRIPTION OF EMBODIMENTS

The following describes a power steering device 100 according to an embodiment of the present invention and a steering device 101 including the same with reference to the drawings.

The steering device 101 is a device that is mounted on a vehicle and turns wheels 5 by converting a steering torque that is applied by a driver to a steering wheel 1 serving as a steering handle.

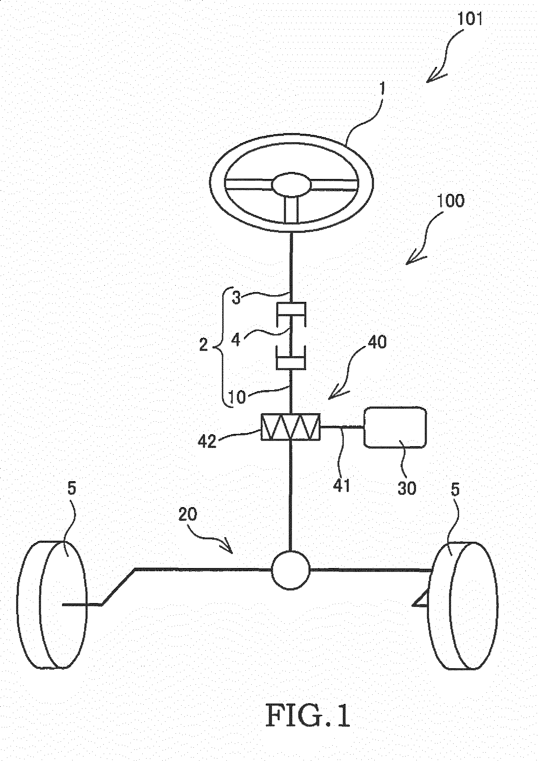

As shown in FIG. 1, the steering device 101 includes a turning mechanism 20 that turns the wheels 5, and the power steering device 100 that applies a turning force for turning the wheels 5 to the turning mechanism 20.

In the steering device 101, a configuration of the turning mechanism 20 that turns the wheels 5 is determined depending on the specifications and the like of the vehicle. Specifically, depending on the specifications and the like of the vehicle, whether to use a rack and pinion mechanism 20A or a link mechanism 20B as the turning mechanism 20 of the steering device 101 mounted on the vehicle is determined.

The power steering device 100 is used in common in both the steering device 101 including the rack and pinion mechanism 20A as the turning mechanism 20, and the steering device 101 including the link mechanism 20B as the turning mechanism 20. In other words, whether the turning mechanism 20 is the rack and pinion mechanism 20A or the link mechanism 20B, the power steering device 100 can apply the turning force for turning the wheels 5.

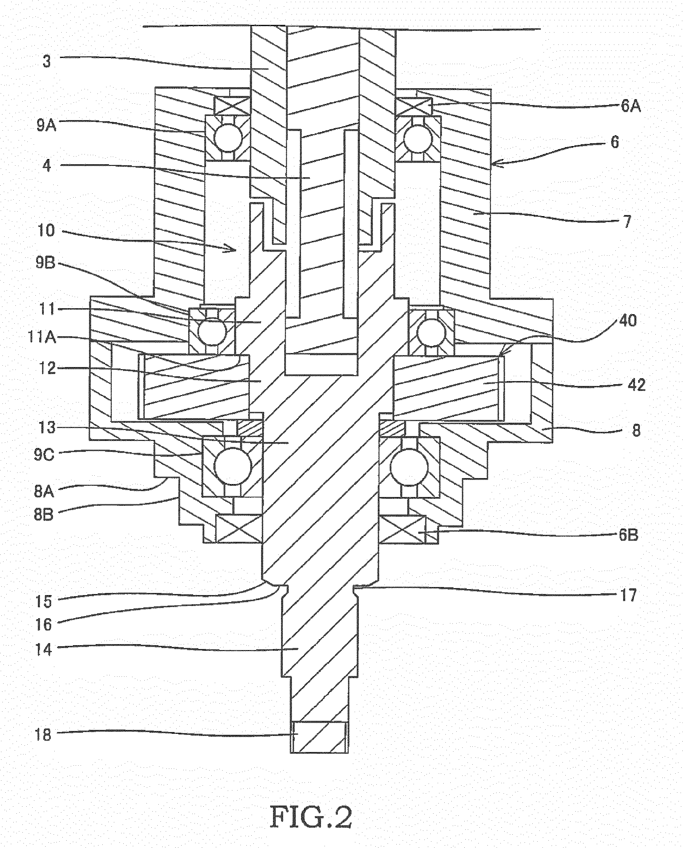

First, an overall configuration of the power steering device 100 will be described with reference to FIGs. 1 and 2.

As shown in FIGs. 1 and 2, the power steering device 100 includes: a steering shaft 2 that rotates under the steering torque input from the steering wheel 1; a shaft case 6 that houses the steering shaft 2; an electric motor 30 that applies a rotation torque for assisting the steering torque to the steering shaft 2; and a speed reduction unit 40 that decelerates the rotation of the electric motor 30 and transmits the decelerated rotation to the steering shaft 2.

The steering shaft 2 includes: an input shaft 3 which is linked to the steering wheel 1 and to which the steering torque is transmitted; an output shaft 10 with a lower end linked to the turning mechanism 20; and a torsion bar 4 via which the input shaft 3 and the output shaft 10 are joined to each other. A specific configuration of the output shaft 10 will be described later.

As shown in FIG. 2, the steering shaft 2 is provided in such a manner that it penetrates the shaft case 6. The shaft case 6 includes: a first shaft case 7 that houses the input shaft 3; and a second shaft case 8 that houses the output shaft 10 and the speed reduction unit 40.

The input shaft 3 of the steering shaft 2 is rotatably supported by the first shaft case 7 via a first shaft bearing 9A. Also, the output shaft 10 is rotatably supported by the first shaft case 7 via a second shaft bearing 9B. Furthermore, the output shaft 10 is rotatably supported by the second shaft case 8 via a third shaft bearing 9C. In this way, the steering shaft 2 is rotatably supported at three points by the shaft case 6 that houses the steering shaft 2, with the first, second, and third shaft bearings 9A, 9B, and 9C serving as support portions. The first, second, and third shaft bearings 9A, 9B, and 9C are ball bearings.

A perpendicular surface 8A and a tubular surface 8B are formed on the outer circumference of the second shaft case 8. The perpendicular surface 8A is formed perpendicularly to the axial direction of the output shaft 10. The tubular surface 8B is connected to the perpendicular surface 8A. As will be described later, in a case where the steering device 101 includes the rack and pinion mechanism 20A as the turning mechanism 20, a rack case 50 that houses a pinion gear 21 is joined to the second shaft case 8.

Furthermore, first and second dust seals 6A and 6B that prevent dust and the like from entering the interior of the shaft case 6 are provided respectively at opening portions of the opposite axial ends of the shaft case 6 that the steering shaft 2 penetrates, that is, at an opening portion of the first shaft case 7 and an opening portion of the second shaft case 8.

The electric motor 30 is a power source that is intended to apply the rotation torque for assisting the driver's steering of the steering wheel 1. A twist amount of the torsion bar 4, which is twisted by the driver's operation on the steering wheel 1, is detected by a torque sensor (not shown). The rotation torque that the electric motor 30 outputs from a rotation shaft (not shown) is computed by a controller (not shown) on the basis of the detected twist amount.

The rotation torque output by the electric motor 30 is decelerated by the speed reduction unit 40, and then transmitted as an assist force to the output shaft 10 of the steering shaft 2. In this way, the electric motor 30 is driven on the basis of the result of detection by the torque sensor that detects the steering torque input from the steering wheel 1, and the electric motor 30 applies the rotation torque to the turning mechanism 20 via the steering shaft 2. Therefore, the electric motor 30 assists the driver's steering of the steering wheel 1.

As shown in FIG. 1, the speed reduction unit 40 is a worm gear mechanism that decelerates the rotation of the electric motor 30 and transmits the decelerated rotation to the output shaft 10. The speed reduction unit 40 includes: a worm shaft 41 that rotates along with the rotation of the electric motor 30; and a worm wheel 42 that engages with the worm shaft 41. The worm wheel 42 of the speed reduction unit 40 is press-fit on a later-described press-fit portion 12 of the output shaft 10, and transmits the output from the speed reduction unit 40 to the output shaft 10.

Once the worm shaft 41 has been rotated by driving the electric motor 30, the worm wheel 42 rotates in a decelerated state at a speed reduction rate corresponding to the number of teeth of the worm shaft 41 and the number of teeth of the worm wheel 42. Therefore, the rotation of the electric motor 30 is decelerated at the speed reduction rate corresponding to the number of teeth of the worm shaft 41 and the number of teeth of the worm wheel 42, and then transmitted to the output shaft 10. In this way, the speed reduction unit 40 decelerates the rotation of the electric motor 30 in the steering device 101. This makes it possible to apply a larger assist force for assisting the steering torque to the output shaft 10.

Next, a specific configuration of the output shaft 10 will be described.

As shown in FIG. 2, the output shaft 10 includes: a large diameter portion 11 supported by the second shaft bearing 9B; the press-fit portion 12 which is formed to have a smaller outer diameter than the large diameter portion 11 and on which the worm wheel 42 of the speed reduction unit 40 is press-fit; a small diameter portion 13 that is formed to have a smaller outer diameter than the press-fit portion 12 and is supported by the third shaft bearing 9C; a serration portion 14 serving as a coupling portion that has a smaller outer diameter than the small diameter portion 13 and has a serrated outer circumference; a tapered portion 15 serving as a positioning portion that is formed between the small diameter portion 13 and the serration unit 14 in the axial direction and positions the later-described pinion gear 21 in the radial direction; and a abutting portion 16 that is formed between the tapered portion 15 and the serration portion 14 and comes into contact with a later-described pitman arm 25 of the link mechanism 20B.

The large diameter portion 11, the press-fit portion 12, the small diameter portion 13, and the serration portion 14 are arranged in this order in the output shaft 10, from an upper end toward a lower end of the output shaft 10. That is, the outer diameter of the large diameter portion 11 is the largest diameter of the output shaft 10. In this way, the output shaft 10 is formed in a stair-like shape that decreases in outer diameter toward a tip (lower end) thereof.

A step 11A is formed between the large diameter portion 11 and the press-fit portion 12. The worm wheel 42 is press-fit on the press-fit portion 12, from the lower end side of the output shaft 10, to the point where the worm wheel 42 comes into contact with the step 11A. As a result, the worm wheel 42 is positioned at a position where it engages with the worm shaft 41.

The tapered portion 15 is formed as a tapered surface that is inclined with respect to a central axis of the output shaft 10 in such a manner that the outer diameter thereof increases toward the small diameter portion 13.

The abutting portion 16 is a flat surface that is formed perpendicularly to the central axis of the output shaft 10. A relief portion 17 that is formed to have a smaller outer diameter than the serration portion 14 is provided between the abutting portion 16 and the serration portion 14.

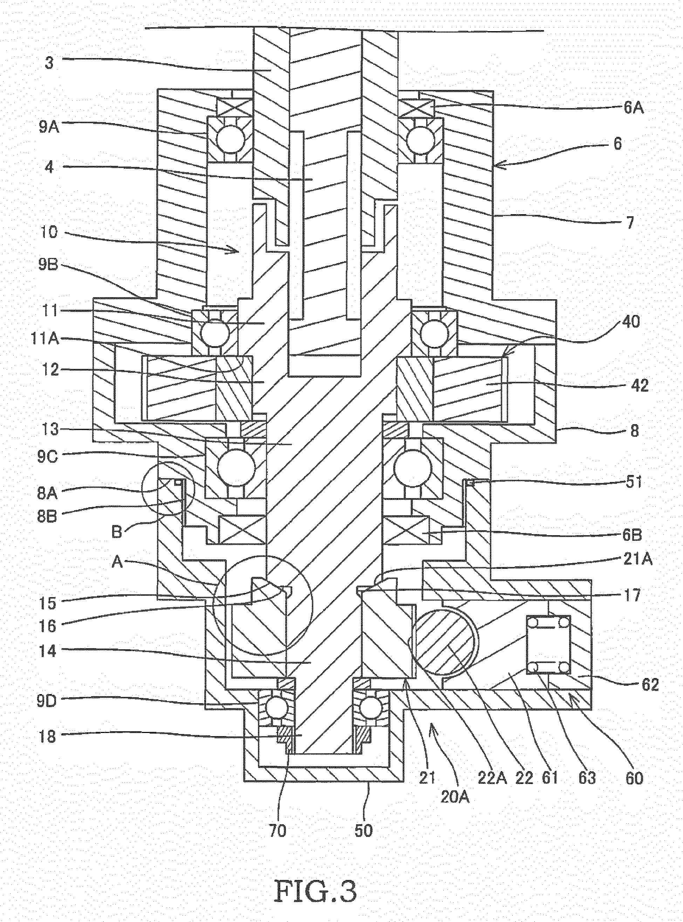

The output shaft 10 is provided with a male thread portion 18 that is located closer to the tip side (the lower side in FIG. 2) than the serration portion 14 is. A nut 70 (see FIG. 3) that prevents components attached to the outer circumference of the output shaft 10 from falling off is screwed to the male thread portion 18.

Next, with reference to FIGs. 3 to 5, a description will be given of a case where the steering device 101 includes the rack and pinion mechanism 20A as the turning mechanism 20.

As shown in FIG. 3, the rack and pinion mechanism 20A includes: the pinion gear 21 that is joined to the output shaft 10 and rotates along with the rotation of the output shaft 10; a rack shaft 22 that has a rack gear 22A engageable with the pinion gear 21 and turns the wheels 5; and the rack case 50 that houses the rack and pinion mechanism 20A.

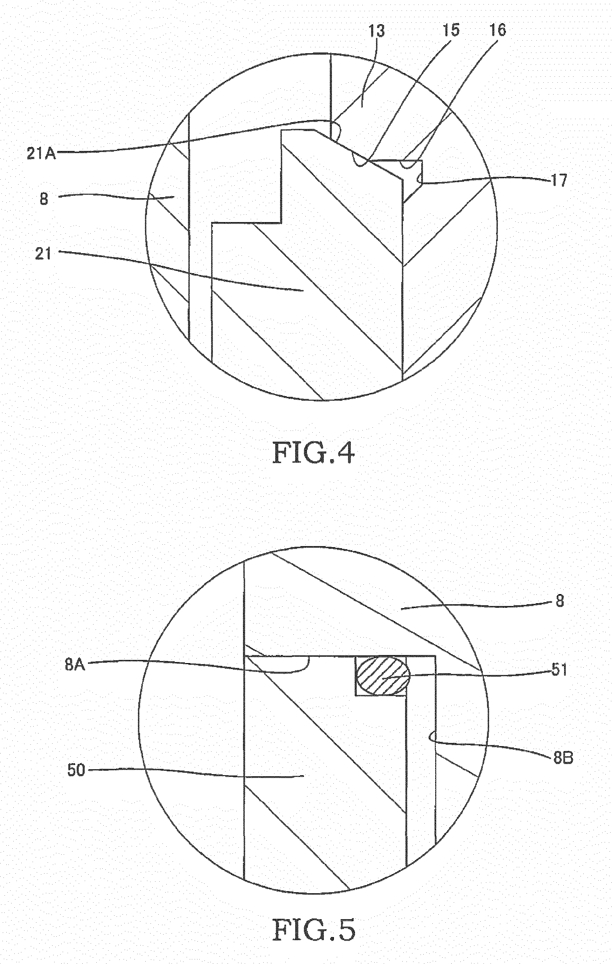

The pinion gear 21 is coupled to the serration portion 14 of the output shaft 10 by serration in a relatively nonrotatable manner, and rotates along with the rotation of the output shaft 10. As shown in FIG. 4, the pinion gear 21 has a gear contact surface 21A that is formed as a tapered surface corresponding to the tapered portion 15 of the output shaft 10. The tapered surface of the pinion gear 21 comes into contact with the tapered surface of the tapered portion 15. A radial gap between the tapered portion 15 and the gear contact surface 21A is formed so as to be smaller than a radial gap (spacing) at the section of serration coupling between the serration portion 14 and the pinion gear 21. In this way, the tapered portion 15 of the output shaft 10 positions the pinion gear 21 in the radial direction with high accuracy, and the accuracy of engagement between the rack shaft 22 and the rack gear 22A is ensured.

As shown in FIG. 3, a support mechanism 60 provided in the rack case 50 pushes the rack shaft 22 toward the pinion gear 21. The support mechanism 60 includes: a pressure pad 61 that comes in sliding contact with the rack shaft 22; an adjuster cover 62 screwed to the rack case 50; and a spring 63 that is interposed in a compressed state between the pressure pad 61 and the adjuster cover 62, and pushes the pressure pad 61 toward the pinion gear 21. Changing the position at which the adjuster cover 62 is screwed will adjust a set load on the spring 63, thereby adjusting a pushing force on the rack shaft 22. As the rack shaft 22 is pushed toward the pinion gear 21, backlash between the rack shaft 22 and the pinion gear 21 is reduced, and gear rattle that is generated when the rack shaft 22 moves due to the rotation of the pinion gear 21 is reduced.

The output shaft 10 rotates as the steering torque that is input to the steering wheel 1 by the driver's operation is transmitted to the output shaft 10 via the input shaft 3 and the torsion bar 4. The rack shaft 22 exerts a linear motion as the pinion gear 21, which engages with the rack gear 22A of the rack shaft 22, rotates along with the rotation of the output shaft 10. The linear motion of the rack shaft 22 turns the wheels 5 via tie rods (not shown) and the like. In this way, the rotation of the output shaft 10 is converted into a linear motion by the rack and pinion mechanism 20A, and the wheels 5 are turned.

The output shaft 10 is rotatably supported by the rack case 50 via a fourth shaft bearing 9D that is provided between the nut 70 and the pinion gear 21 in the axial direction.

As shown in FIG. 5, the rack case 50 comes into contact with the perpendicular surface 8A, which serves as a contact portion of the second shaft case 8, along the axial direction of the pinion gear 21. Furthermore, the rack case 50 is fit on the tubular surface 8B, which serves as a fitting portion of the second shaft case 8, via a gap in the radial direction of the pinion gear 21. The radial gap between the rack case 50 and the tubular surface 8B of the second shaft case 8 is formed so as to be larger than the gap between the tapered portion 15 of the output shaft 10 and the gear contact surface 21A of the pinion gear 21.

A seal member 51 is provided between the rack case 50 and the perpendicular surface 8A of the second shaft case 8. The seal member 51 is compressed in the axial direction of the pinion gear 21 and the output shaft 10, but is not compressed in the radial direction of the same. The seal member 51 prevents the entry of dust and the like from between the rack case 50 and the second shaft case 8.

Here, in a case where a seal member 51 compressed in the radial direction is provided between the rack case 50 and the second shaft case 8 with no radial gap therebetween, the relative positions of the rack case 50 and the second shaft case 8 in the radial direction cannot be adjusted. This makes it difficult to join the rack case 50 and the second shaft case 8 to each other at appropriate positions while ensuring the accuracy of engagement between the pinion gear 21 and the rack gear 22A.

In contrast, in the steering device 101, the second shaft case 8 is provided so as to, together with the rack case 50, compress the seal member 51 in the axial direction rather than the radial direction, and a radial gap is formed between the second shaft case 8 and the rack case 50. Therefore, by adjusting the relative positions of the rack case 50 and the second shaft case 8 in the radial direction, the rack case 50 and the second shaft case 8 can easily be joined to each other while ensuring the accuracy of engagement between the pinion gear 21 and the rack gear 22A. In other words, it is possible to prevent the accuracy of engagement between the pinion gear 21 and the rack gear 22A from degrading in order to join the rack case 50 and the second shaft case 8 to each other.

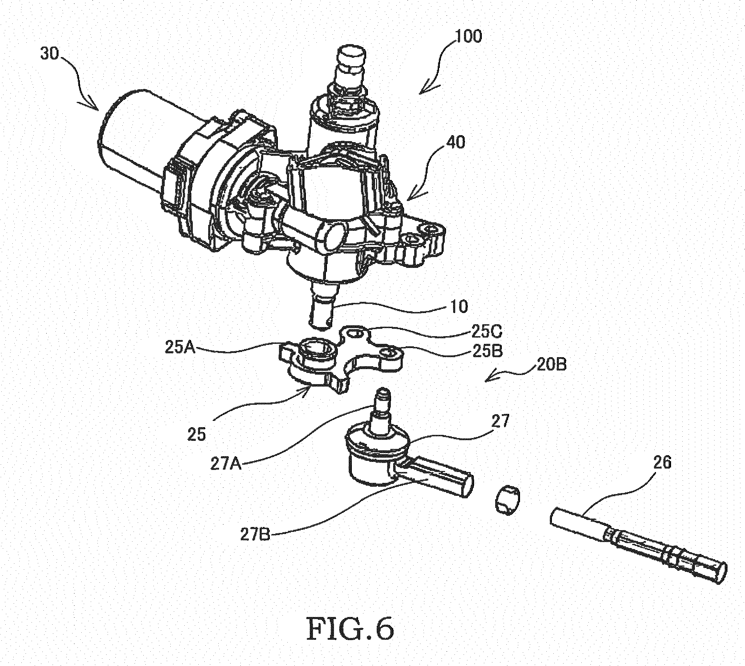

Next, with reference to FIGs. 6 to 8, a description will be given of a case where the steering device 101 includes the link mechanism 20B as the turning mechanism 20.

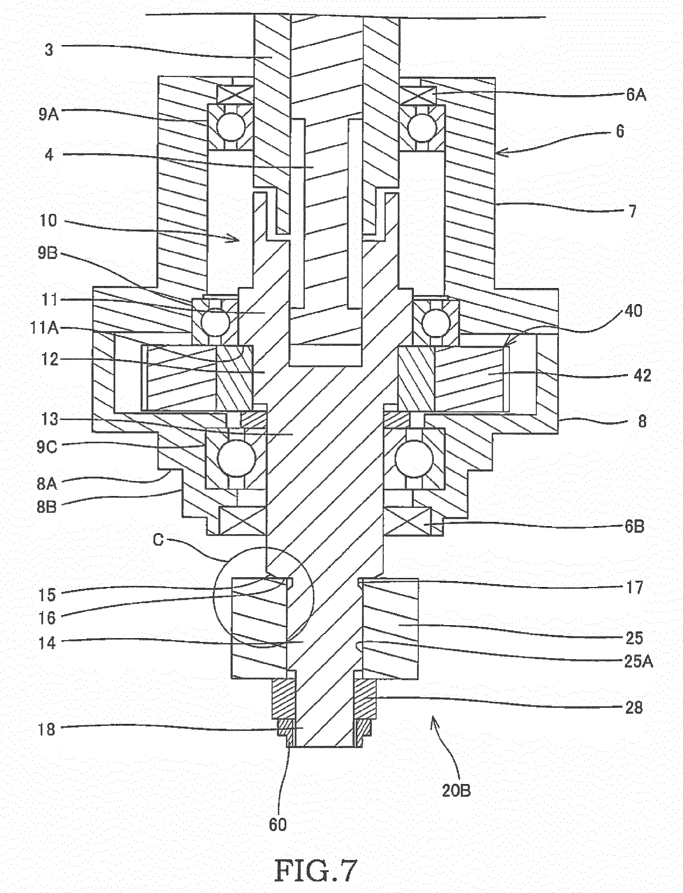

As shown in FIGs. 6 and 7, the link mechanism 20B includes: the pitman arm 25 that is joined to the output shaft 10 and rotates along with the rotation of the output shaft 10; a tie rod 26 joined to a wheel 5; and a rod end 27 via which the pitman arm 25 and the tie rod 26 are joined to each other.

The pitman arm 25 has: an output shaft hole 25A in which the serration portion 14 of the output shaft 10 is inserted and which is coupled to the serration portion 14 by serration; and a pair of joint holes 25B, 25C that are separated from the output shaft hole 25A and are arranged substantially in parallel to the output shaft hole 25A.

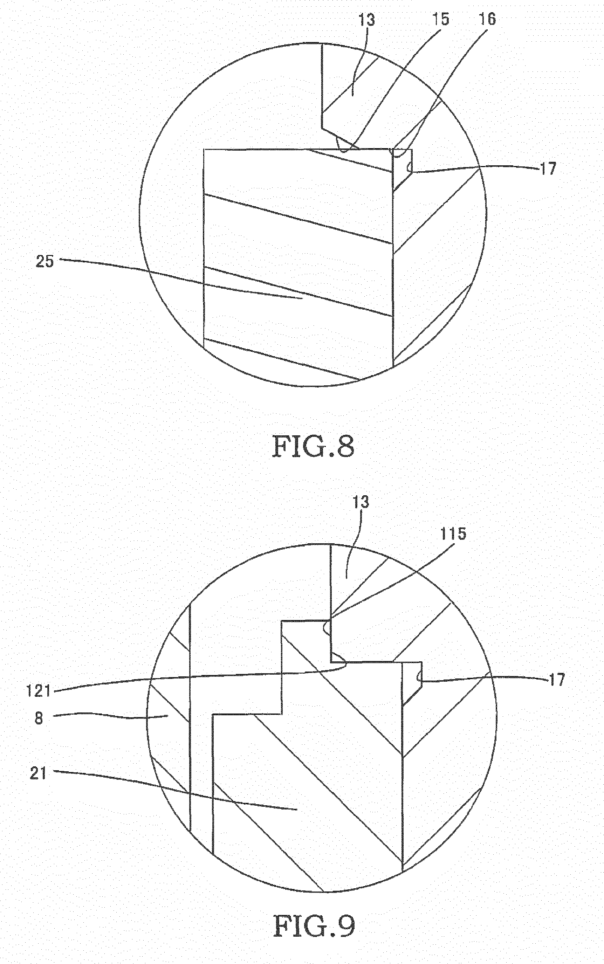

As shown in FIG. 8, in a state where the pitman arm 25 is coupled to the serration portion 14 by serration, the pitman arm 25 is separated from the tapered portion 15 without being in contact with the tapered portion 15, and is in contact with the abutting portion 16. The pitman arm 25 does not require highly accurate positioning in the radial direction, unlike the pinion gear 21 that requires the accuracy of engagement. For this reason, the pitman arm 25 may be separated from the tapered portion 15 without being in contact with the tapered portion 15. Note that in a case where it is necessary to position the pitman arm 25 in the radial direction with high accuracy, the pitman arm 25 may be configured in such a manner that, similarly to the pinion gear 21, a tapered contact surface is formed on the pitman arm 25 and the tapered portion 15 and the contact surface come into contact with each other.

The rod end 27 is a ball joint via which the tie rod 26 and the pitman arm 25 are joined to each other. One shaft 27A of the rod end 27 is inserted in and joined to one joint hole 25B of the pitman arm 25. The other shaft 27B of the rod end 27 is joined to one end portion of the tie rod 26. A wheel 5 is joined to the other end portion of the tie rod 26 via a knuckle arm and the like (not shown). In FIG. 6, only the tie rod 26 and the rod end 27 joined to one wheel 5 are illustrated, and the illustration of a tie rod joined to another wheel 5 and a rod end joined to the other joint hole 25C of the pitman arm 25 is omitted.

Generally, in a case where the turning mechanism 20 is the link mechanism 20B, a case that houses the pitman arm 25, like the rack case 50, is not provided. As shown in FIG. 7, a collar member 28 is provided between the nut 70 and the pitman arm 25 in place of the fourth shaft bearing 9D of the rack and pinion mechanism 20.

The rotation of the output shaft 10 causes the pitman arm 25 to rotate around the output shaft 10. Along with the rotation of the pitman arm 25, the rod end 27 joined at a position distanced from the output shaft 10 exerts an arc motion around the output shaft 10. Accordingly, the rotation of the output shaft 10 is transmitted as a linear motion to the tie rod 26 via the rod end 27. In this way, the link mechanism 20B converts the rotation of the output shaft 10 of the steering shaft 2 into a turning force for the wheels 5.

As described above, both the pinion gear 21 of the rack and pinion mechanism 20A and the pitman arm 25 of the link mechanism 20B can be coupled to the serration portion 14 of the output shaft 10 by serration, and one of the pinion gear 21 and the pitman arm 25 is selectively coupled to the serration portion 14 depending on the specifications and the like of the vehicle. In addition, as the tapered portion 15 can position the pinion gear 21 in the radial direction with high accuracy, the accuracy of engagement between the pinion gear 21 and the rack gear of the rack shaft 22 is ensured, and the functions of the rack and pinion mechanism 20A serving as the turning mechanism 20 are not impaired. Therefore, the power steering device 100 is applicable to both the steering device 101 that includes the rack and pinion mechanism 20A as the turning mechanism 20, and the steering device 101 that includes the link mechanism 20B as the turning mechanism 20. Thus, it is not necessary to change the configuration of the power steering device 100 in conformity with the type of the turning mechanism 20, and the manufacturing cost of the power steering device 100 can be reduced.

Next, with reference to FIG. 9, an exemplary modification of the above-described embodiment will be described.

In the above-described embodiment, the coupling portion of the output shaft 10 is the serration portion 14. As the pinion gear 21 and the pitman arm 25 are coupled to the serration portion 14 by serration, they are arranged in such a manner that they are nonrotatable relative to the output shaft 10. Alternatively, as long as the pinion gear 21 and the pitman arm 25 are coupled in a relatively nonrotatable manner, the coupling portion is not limited to the serration portion 14 and may be structured in other ways. For example, the coupling portion may be a noncircular shaft portion that is formed to have a cross-section in a shape other than a true circle shape, such as a polygonal cross-section and an elliptic cross-section, and the pinion gear 21 and the pitman arm 25 may have a hole portion with a cross-sectional shape corresponding to the cross-sectional shape of the noncircular shaft portion. In this case, the noncircular shaft portion of the output shaft 10 is inserted in the hole portion of the pinion gear 21 or the pitman arm 25, and accordingly, the noncircular shaft portion and the pinion gear 21 or the pitman arm 25 are coupled to each other in a relatively nonrotatable manner. Furthermore, the coupling portion may be a coupling shaft portion in which a keyway is formed. In this case, a corresponding keyway is formed also in the pinion gear 21 and the pitman arm 25, and the coupling shaft portion and the pinion gear 21 or the pitman arm 25 are coupled to each other in a relatively nonrotatable manner via a key inserted in and across the keyway of the coupling shaft portion and the keyway of the pinion gear 21 or the pitman arm 25.

Furthermore, in the above-described embodiment, the positioning portion that positions the pinion gear 21 in the radial direction is the tapered portion 15. As opposed to this, as shown in FIG. 9, the positioning portion may be a spigot joint portion 115 that is formed, in the output shaft 10, as a projection portion that is fit in a recess portion 121 formed in the pinion gear 21. In this case also, a radial gap between the spigot joint portion 115 and the recess portion 121 is formed so as to be smaller than a radial gap at the section of serration coupling between the serration portion 14 and the pinion gear 21. Note that a projection portion may be formed in the pinion gear 21, and a recess portion may be formed as the spigot joint portion 115 in the output shaft 10.

Furthermore, in the above-described embodiment, the output shaft 10 includes the abutting portion 16 with which the pitman arm 25 comes into contact. As opposed to this, the abutting portion 16 may not be formed in the output shaft 10. In this case, similarly to the pinion gear 21, the pitman arm 25 is also positioned in the radial direction by the tapered portion 15.

Furthermore, in the above-described embodiment, the speed reduction unit 40 is the worm gear mechanism. As opposed to this, the speed reduction unit 40 may include a plurality of gear mechanisms. For example, the speed reduction unit 40 may include a first speed reduction unit composed of a planetary gear mechanism and a second speed reduction unit composed of a worm gear mechanism, and the two speed reduction units may decelerate the rotation of the electric motor 30 and transmit the decelerated rotation to the steering shaft 2.

The above-described embodiment achieves the following advantageous effects.

In the power steering device 100, both the pinion gear 21 of the rack and pinion mechanism 20A and the pitman arm 25 of the link mechanism 20B can be coupled to the serration portion 14 of the output shaft 10 by serration, and one of the pinion gear 21 and the pitman arm 25 is selectively coupled to the serration portion 14 depending on the specifications and the like of the vehicle. Furthermore, as the tapered portion 15 can position the pinion gear 21 in the radial direction with high accuracy, the accuracy of engagement between the pinion gear 21 and the rack gear 22A of the rack shaft 22 is ensured, and the functions of the rack and pinion mechanism 20A serving as the turning mechanism 20 are not impaired. Therefore, the components of the power steering device 100, including the steering shaft 2, can be shared by the steering device 101 including the rack and pinion mechanism 20A as the turning mechanism 20 and the steering device 101 including the link mechanism 20B as the turning mechanism 20. This can reduce the manufacturing cost of the power steering device 100.

Furthermore, the steering shaft 2 is supported by the shaft case 6 via the first, second, and third shaft bearings 9A, 9B, and 9C. As the steering shaft 2 is thus supported by the shaft case 6 via support portions located at two or more areas, the steering shaft 2 is supported in a stable state even before assembling the power steering device 100 and the turning mechanism 20. Therefore, the assembling work of assembling the power steering device 100 and the turning mechanism 20 by coupling the pinion gear 21 or the pitman arm 25 to the output shaft 10 of the steering shaft 2 can easily be performed.

Furthermore, in a case where the turning mechanism 20 is the rack and pinion mechanism 20A, the second shaft case 8 of the shaft case 6 is provided so as to, together with the rack case 50, compress the seal member 51 in the axial direction without compressing the seal member 51 in the radial direction, and a radial gap is formed between the second shaft case 8 and the rack case 50. Therefore, the rack case 50 and the second shaft case 8 can easily be joined to each other while ensuring the accuracy of engagement between the pinion gear 21 and the rack gear 22A.

Below is a comprehensive description of the configurations, functions, and advantageous effects of the embodiment of the present invention.

The power steering device 100, which applies a turning force for turning the wheels to the turning mechanism 20 (the rack and pinion mechanism 20A, the link mechanism 20B), includes: the steering shaft 2 that rotates under a steering torque input from the steering wheel 1; the electric motor 30 that applies a rotation torque for assisting the steering torque to the steering shaft 2; and the speed reduction unit 40 that decelerates the rotation of the electric motor 30 and transmits the decelerated rotation to the steering shaft 2. The steering shaft 2 includes the serration portion 14 and the positioning portion (the tapered portion 15, the spigot joint portion 115). One of the pinion gear 21 and the pitman arm 25 of the turning mechanism 20 (the rack and pinion mechanism 20A, the link mechanism 20B) is selectively coupled to the serration portion 14 by serration. The positioning portion positions the pinion gear 21 in the radial direction by coming into contact with the pinion gear 21.

With this configuration, the serration portion 14 enables both the pinion gear 21 of the rack and pinion mechanism 20A and the pitman arm 25 of the link mechanism 20B to be coupled to the steering shaft 2. Furthermore, as the steering shaft 2 is provided with the positioning portion (the tapered portion 15, the spigot joint portion 115), the pinion gear 21, which is required to be positioned in the radial direction with relatively high accuracy in order to ensure the accuracy of engagement with the rack gear 22A, can be positioned in the radial direction with high accuracy. Therefore, no matter which one of the rack and pinion mechanism 20A and the link mechanism 20B is used as the turning mechanism 20, the steering shaft 2 of the power steering device 100 can be shared. This can reduce the manufacturing cost of the power steering device 100.

Furthermore, the power steering device 100 further includes the shaft case 6 that houses the steering shaft 2 and supports the steering shaft 2 via two or more support portions.

With this configuration, as the steering shaft 2 is supported by the shaft case 6 via two or more support portions, the steering shaft 2 is supported in a stable manner. Therefore, assembly of the power steering device 100 and the turning mechanism 20 (the rack and pinion mechanism 20A, the link mechanism 20B) can easily be performed.

Furthermore, in the power steering device 100, the shaft case 6 has the perpendicular surface 8A and the tubular surface 8B. When the pinion gear 21 is coupled to the serration portion 14, the rack case 50 housing the pinion gear 21 comes into contact with the perpendicular surface 8A from the axial direction of the pinion gear 21. The rack case 50 is fit on the tubular surface 8B via a gap in the radial direction of the pinion gear 21.

With this configuration, as a radial gap is formed between the shaft case 6 and the rack case 50, the rack case 50 and the shaft case 6 can easily be joined to each other while ensuring the accuracy of engagement with the pinion gear 21. Therefore, assembly of the power steering device 100 and the turning mechanism 20 can easily be performed.

Furthermore, in the power steering device 100, the steering shaft 2 further includes the abutting portion 16 that comes into contact with the pitman arm 25 when the pitman arm 25 is coupled to the serration portion 14.

With this configuration, when the pitman arm 25, which is not required to be positioned in the radial direction with high accuracy unlike the pinion gear 21, is coupled to the steering shaft 2, the pitman arm 25 can come into contact with the abutting portion 16 without coming into contact with the positioning portion (the tapered portion 15, the spigot joint portion 115).

Furthermore, in the power steering device 100, the positioning portion is the tapered portion 15 that comes into contact with one of the pinion gear 21 and the pitman arm 25 at a tapered surface.

Furthermore, in the power steering device 100, the positioning portion may be the spigot joint portion 115 that is fit in one of the pinion gear 21 and the pitman arm 25.

The steering device 101 includes: one of the rack and pinion mechanism 20A and the link mechanism 20B that serve as the turning mechanism 20 for turning the wheels 5; and the power steering device 100 that applies the turning force for turning the wheels 5 to one of the rack and pinion mechanism 20A and the link mechanism 20B.

Embodiments of this invention were described above, but the above embodiments are merely examples of applications of this invention, and the technical scope of this invention is not limited to the specific constitutions of the above embodiments.

This application claims priority based on Japanese Patent Application No.2015-225577 filed with the Japan Patent Office on November 18, 2015, the entire contents of which are incorporated into this specification.

## Claims

1. A power steering device configured to apply a turning force for turning wheels to a turning mechanism, the power steering device comprising:
a steering shaft configured to rotate under a steering torque input from a steering handle;
an electric motor configured to apply a rotation torque for assisting the steering torque to the steering shaft; and
a speed reduction unit configured to decelerate the rotation of the electric motor and transmit the decelerated rotation to the steering shaft,
wherein
the steering shaft includes a coupling portion and a positioning portion,
one of a pinion gear and a pitman arm of the turning mechanism is selectively coupled to the coupling portion in a relatively nonrotatable manner, and
the positioning portion positions the pinion gear in a radial direction by coming into contact with the pinion gear.

2. The power steering device according to claim 1, further comprising
a shaft case configured to house the steering shaft and support the steering shaft via two or more support portions.

3. The power steering device according to claim 2,
wherein
the shaft case includes a contact portion and a fitting portion,
when the pinion gear is coupled to the coupling portion, a rack case housing the pinion gear comes into contact with the contact portion from an axial direction of the pinion gear, and
the rack case is fit on the fitting portion via a gap in a radial direction of the pinion gear.

4. The power steering device according to claim 1,
wherein
the steering shaft further includes an abuttingt portion configured to come into contact with the pitman arm when the pitman arm is coupled to the coupling portion.

5. The power steering device according to claim 1,
wherein
the positioning portion is a tapered portion configured to come into contact with one of the pinion gear and the pitman arm at a tapered surface.

6. The power steering device according to claim 1,
wherein
the positioning portion is a spigot joint portion configured to be fit in one of the pinion gear and the pitman arm.

7. A steering device, comprising:
one of a rack and pinion mechanism and a link mechanism serving as the turning mechanism for turning the wheels; and
the power steering device according to claim 1 configured to apply the turning force for turning the wheels to one of the rack and pinion mechanism and the link mechanism.
